(19) Europäisches Patentamt
European Patent Office
Office européen des brevets

(11) **EP 4 112 160 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **22178647.8**

(22) Anmeldetag: **13.06.2022**

(51) Internationale Patentklassifikation (IPC):
**B01F 33/3012** (2022.01)   **B01F 25/435** (2022.01)
**B33Y 80/00** (2015.01)

(52) Gemeinsame Patentklassifikation (CPC):
**B01F 33/3012; B01F 25/435;** B33Y 80/00

(54) **VORRICHTUNG UND VERFAHREN FÜR DAS MISCHEN VON ZWEI FLÜSSIGKEITEN ODER PASTEN**

DEVICE AND METHOD FOR MIXING TWO LIQUIDS OR PASTES

DISPOSITIF ET PROCÉDÉ DE MÉLANGE DE DEUX LIQUIDES OU PÂTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2021   DE 102021115994**

(43) Veröffentlichungstag der Anmeldung:
**04.01.2023   Patentblatt 2023/01**

(73) Patentinhaber: **Institut für Bioprozess- und Analysenmesstechnik e.V.**
**37308 Heilbad Heiligenstadt (DE)**

(72) Erfinder: **ROTHE, Holger**
**37327 Leinefelde-Worbis (DE)**

(74) Vertreter: **Maikowski & Ninnemann Patentanwälte Partnerschaft mbB**
**Postfach 15 09 20**
**10671 Berlin (DE)**

(56) Entgegenhaltungen:
EP-A1- 1 930 070        EP-A1- 2 623 196
WO-A1-2019/028002        WO-A1-96/14925
WO-A1-99/31015         US-A1- 2009 321 367

**Beschreibung**

Die Erfindung betrifft eine Vorrichtung für das Mischen von zwei Flüssigkeiten oder Pasten, aufweisend einen ersten Zulauf, einen zweiten Zulauf, einen ersten Hohlzylinder, einen zweiten Hohlzylinder, ein Mischelement und optional mindestens einen Zentralauslass. Das Mischelement weist eine Mischplatte mit einer ersten und einer zweiten Seite auf und mindestens zwei Teilzuläufe, durch die die erste Seite der Mischplatte mit dem ersten Hohlzylinder verbunden ist sowie mindestens zwei Teilzuläufe, durch die die zweite Seite der Mischplatte mit dem zweiten Hohlzylinder verbunden ist. Weiterhin weist die erste Seite der Mischplatte einen ersten Auslass und die zweite Seite der Mischplatte einen zweiten Auslass, wobei der erste Auslass zumindest teilweise durch den ersten Hohlzylinder und der zweite Auslass zumindest teilweise durch den zweiten Hohlzylinder verläuft. Weiterhin umfasst die Erfindung ein Verfahren zum Mischen einer ersten und einer zweiten Flüssigkeit oder Paste mit einer erfindungsgemäßen Vorrichtung.

Vorrichtungen zum Mischen von zwei Flüssigkeiten oder Pasten haben ein weites Anwendungsfeld. In der Fluidik beispielsweise werden Flüssigkeiten transportiert, manipuliert und analysiert. Ein wichtiger Vorgang bei vielen dieser Anwendungen ist das Mischen verschiedener Flüssigkeiten, z.B. Lösungen und Analysaten. Verschiedene Vorrichtungen, wie beispielsweise Umlenkmischköpfe, Linearmischköpfe oder Gradientenmischköpfe zum Mischen von Flüssigkeiten sind aus dem Stand der Technik bereits bekannt.

Die DE 10 2018 104 840 A1 beispielsweise offenbart einen Mischer mit einer Fluidleitung mit nichtkreisförmige Durchflussquerschnitt. Dieser Fluidleitung werden aufeinanderfolgend Pakete der zu mischenden Fluide zugeführt. Der Mischer ist auf das Mischen von zwei Phasen ausgelegt, die aus einem Zulauf zugeführt werden. Weiterhin ist die Vorrichtung speziell auf den Einsatz in der Flüssigkeitschromatographie konstruiert. Sollen zwei Flüssigkeiten gemischt werden, die über einzelne Zuläufe zugeführt werden, ist diese Mischvorrichtung wenig effektiv.

Die DE 103 56 308 offenbart einen fluidischen Mischer, bei dem ein fluidischer Strom durch ein Strömungsteilerelement verzweigt und nach dem Strömungsteilerelement wieder zusammengeführt wird. In einen Ausführungsform werden mehrere Strömungteilerelemente hintereinander angeordnet, so dass der fluidische Strom immer wieder geteilt und zusammengeführt wird. Hierdurch soll eine Durchmischung von mehreren Komponenten in dem fluidischen Strom erreicht werden. Der fluidische Mischer gemäß der DE 103 56 308 weist einen mehrstufigen Mischprozess auf. In einem solchen Mischvorgang legen die Ausgangsprodukte während des Mischvorganges einen relativ langen Weg während des Mischvorgangs zurück, was ein großes Totvolumen der Vorrichtung mit sich bringt. Die beiden zu mischenden Phasen durchlaufen nach dem Erstkontakt noch mehrere Mischstufen, was zur Folge hat, dass eine Reaktion beider Phasen bereits nach der ersten Mischstufe beginnt, die Mischphase jedoch noch einen längeren Zeitraum (während des Durchlaufens der weiteren Mischstufen) bis zum Verlassen des Mischers benötigt. Anwendungen, bei den die Ausgangsprodukte eine Reaktion miteinander eingehen, beispielsweise miteinander vernetzen (aushärten) können in diesem Mischer nicht gemischt werden, da die Verweilzeit im Mischer größer als die Reaktionszeit für die Vernetzung ist und die Mischphase bereits im Mischer Vernetzt bzw. Aushärtet.

Gradientenmischköpfe finden beispielsweise Anwendung in additiven Fertigungsverfahren, wie dem 3D-Druck. Bekannte Gradientenmischköpfe basieren hier beispielsweise auf dem Prinzip, das Ausgangsprodukte, sogenannte Precursoren, zwischen Edelstahldiscs gewalgt werden, sodass nach mehreren Stufen eine Durchmischung der Ausgangsprodukte zustande kommt. Das effektive Totvolumen des Mischkopfes, also das Volumen vom Erstkontakt der beiden Ausgangsstoffe bis zur Austrittsöffnung nach dem Durchmischen der Ausgangsstoffe ist hier oft sehr groß. Laut Angaben von Herstellern solcher Mischköpfe, liegt das Totvolumen bei mikrofluidischen Anwendungen im Bereich von 950 $\mu$l.

Zunehmend werden additive Fertigungsverfahren als 3D-Bioprintingverfahren durchgeführt. Beim Bioprinting werden natürliche oder auch synthetische Materialien verwendet, die die Gewebeeigenschaften bestmöglich imitieren und Zellen, Wachstumsfaktoren und andere Substanzen miteinander verbinden. Dabei nehmen beispielsweise Hydrogele die Aufgabe als strukturgebender Bestandteil der Biotinte war und dienen gleichzeitig auch als EMC-Imitat, um Zellen eine gewohnte Mikroumgebung zu bieten. Die in Bioprintingverfahren verwendeten Gele und bioaktiven Additive wie beispielsweise Collagen, Fibronektin und Zytokine sind zum Teil sehr kostenintensiv, weshalb der Abfall in Bioprintingverfahren möglichst geringgehalten werden sollte, um die Wirtschaftlichkeit des Verfahrens zu erhöhen. Unter Nutzung der aus dem Stand der Technik bekannten Gradientenmischköpfe verbleibt nach jedem 3D-Druckprozess ein Volumen von ca. 1 ml als Abfall im Gradientenmischkopf, was im Vergleich zum Volumen der üblicherweise in Bioprintingverfahren gedruckten Strukturen enorm ist. Als Beispiel: Ein Gel von der Größe eines Objektträgers mit einer Höhe von 500 $\mu$m enthält 75x25x0,5 mm$^3$ Biotinte, also etwa ebenso viel wie Abfall produziert wurde. Drastischer wird der Einfluss des Totvolumens noch, wenn unterschiedliche Konzentrationen innerhalb eines Gels oder aber entsprechende Gradienten gedruckt werden sollen. Hier summiert sich das Totvolumen und damit der Abfall bei jeder Änderung des Mischungsverhältnisses auf, was bedeutet, dass bei einem solchen Druckprozess ein Vielfaches der gedruckten Struktur als Abfall anfällt. Damit sind die Gradientenmischköpfe aus dem Stand der Technik äußerst unwirtschaftlich.

Darüber hinaus ist ein kleines Totvolumen von Vorteil, da hierdurch auch ermöglicht wird, dass zwei Ausgangsprodukten in einem Mischer zügig vermischt werden können. Insbesondere ermöglicht dies die Anwendung des Mischers bei der Mischung von zwei Ausgangsprodukten, die miteinander eine Reaktion, wie beispielsweise eine Vernetzung eingehen. Ein geeigneter Mischer sollte hierfür ein Totvolumen aufweisen, das eine Mischung der Ausgangsprodukte in einer Zeit ermöglicht, die unterhalb der Vernetzungszeit der Ausgangsprodukte liegt.

Ein weiteres Problem betrifft die mehrteilige Ausführung der Gradientenmischköpfe aus dem Stand der Technik, die einerseits Dichtigkeitsprobleme mit sich bringt und andererseits eine Reinigung des Gradientenmischkopfes erschwert.

Es ist die Aufgabe der vorliegenden Erfindung, die aus dem Stand der Technik bekannten Nachteile zu beheben und eine Vorrichtung für das Mischen von zwei Flüssigkeiten oder Pasten zur Verfügung zu stellen, die sich durch eine besonders hohe Wirtschaftlichkeit auszeichnet, besonderes zuverlässig ist und einfach gereinigt werden kann.

Die EP 1 930 070 A1 offenbart eine Vorrichtung gemäß dem Oberbegriff des Anspruchs 1.

Hierfür stellt die Erfindung eine Vorrichtung für das Mischen von zwei Flüssigkeiten oder Pasten, aufweisend einen ersten Zulauf, einen zweiten Zulauf, einen ersten Hohlzylinder, einen zweiten Hohlzylinder, ein Mischelement und optional mindestens einen Zentralauslass zur Verfügung,

wobei das Mischelement eine Mischplatte mit einer ersten und einer zweiten Seite aufweist;
die Mischplatte einen Hohlraum aufweist und im Wesentlichen zylinderförmig ist;
das Mischelement mindestens zwei Teilzuläufe aufweist, durch die die erste Seite der Mischplatte mit dem ersten Hohlzylinder verbunden ist;
das Mischelement mindestens zwei Teilzuläufe aufweist, durch die die zweite Seite der Mischplatte mit dem zweiten Hohlzylinder verbunden ist;
die erste Seite der Mischplatte einen ersten Auslass und die zweite Seite der Mischplatte einen zweiten Auslass aufweist; und
der erste Auslass zumindest teilweise durch den ersten Hohlzylinder und der zweite Auslass zumindest teilweise durch den zweiten Hohlzylinder verläuft.

Weiterhin umfasst die vorliegende Erfindung Verfahren zum Mischen einer ersten und einer zweiten Flüssigkeit oder Paste mit einer erfindungsgemäßen Vorrichtung. Das erfindungsgemäße Verfahren umfasst die folgenden Schritten:

- die erste Flüssigkeit über den ersten Zulauf und den ersten Holzylinder zugeführt wird;
- der Flüssigkeitsstrom der ersten Flüssigkeit durch die mindestens zwei Teilzuläufe auf Teilströme aufgeteilt wird, die auf die erste Seite der Mischplatte treffen;
- die zweite Flüssigkeit über den zweiten Zulauf und den zweiten Holzylinder zugeführt wird;
- der Flüssigkeitsstrom der zweiten Flüssigkeit durch die mindestens zwei Teilzuläufe auf Teilströme aufgeteilt wird, die auf die zweite Seite der Mischplatte treffen;
- der Teilströme des ersten Flüssigkeitsstromes und die Teilströme des zweiten Flüssigkeitsstromes in der Mischplatte aufeinandertreffen, sich vermischen und eine Flüssigkeitsgemisch bilden;
- ein erster Teil des Flüssigkeitsgemischs durch den ersten Auslass durch den ersten Holzylinder hindurch von der Mischplatte abgeführt wird und ein zweiter Teil der des Flüssigkeitsgemischs durch den zweiten Auslass durch den zweiten Holzylinder hindurch von der Mischplatte abgeführt wird;
- optional das der erste und der zweite Teil des von der Mischplatte abgeführten Flüssigkeitsgemischs zusammengeführt werden und durch mindestens einen Zentralauslass weitergeleitet werden.

**Detaillierte Beschreibung**

Die erfindungsgemäße Vorrichtung ist dazu eingerichtet zwei Flüssigkeiten oder zwei Pasten zu mischen. Unter Pasten sind dabei Feststoff-Flüssigkeitsgemische, also Suspensionen mit einem hohen Gehalt an Festkörpern zu verstehen. Die Verwendung von Pasten beispielsweise in 3D-Druckverfahren ist dem Fachmann bekannt. Alle im folgenden beschriebenen Merkmale treffen sowohl auf das Mischen von zwei Flüssigkeiten als auch auf das Mischen von zwei Pasten zu, auch wenn unter Umständen nur von Flüssigkeiten oder Pasten die Rede ist.

Die erfindungsgemäße Vorrichtung weist einen ersten Zulauf, einen zweiten Zulauf, einen ersten Hohlzylinder, einen zweiten Hohlzylinder, ein Mischelement und optional mindestens einen Zentralauslass auf.

Eine erste Flüssigkeit oder Paste wird der Vorrichtung über den ersten Zulauf zugeführt, währen eine zweite Flüssigkeit oder Paste über den zweiten Zulauf der erfindungsgemäßen Vorrichtung zugeführt wird. Der erste Zulauf mündet erfindungsgemäß an den ersten Hohlzylinder und der zweite Zulauf an den zweiten Hohlzylinder.

Die erfindungsgemäße Vorrichtung weist weiterhin ein Mischelement auf, welches eine Mischplatte mit einer ersten und einer zweiten Seite aufweist. Das Mischelement weist weiterhin mindestens zwei Teilzuläufe auf, durch die die erste Seite der Mischplatte mit dem ersten Hohlzylinder verbunden ist. Weiterhin weist die Mischplatte mindestens zwei Teilzuläufe auf, durch die die zweite Seite der Mischplatte mit dem zweiten Hohlzylinder verbunden ist.

Die erste Seite der Mischplatte ist erfindungsgemäß immer mit genauso vielen Teilzuläufen mit dem ersten Hohlzylinder verbunden, wie die zweite Seite der Mischplatte mit Teilzuläufen mit dem zweiten Hohlzylinder verbunden ist.

In einer Ausführungsform der vorliegenden Erfindung ist die erste Seite der Mischplatte durch 2 bis 10, bevorzugt durch 4 bis 8, besonders bevorzugt durch 6 Teilzuläufe mit dem ersten Hohlzylinder verbunden und die zweite Seite der Mischplatte ist mit genauso vielen Teilzuläufen mit dem zweiten Hohlzylinder verbunden, wie die erste Seite der Mischplatte mit Teilzuläufen mit dem ersten Hohlzylinder verbunden ist.

Bevorzugt sind alle Teilzuläufe, die mit dem ersten Hohlzylinder verbunden sind im Wesentlichen am Rand der ersten Seite der Mischplatte angebracht und die Teilzuläufe sind zueinander kongruent angeordnet. Weiterhin sind alle Teilzuläufe, die mit dem zweiten Hohlzylinder verbunden sind im Wesentlichen am Rand der zweiten Seite der Mischplatte angebracht und die Teilzuläufe sind ebenfalls zueinander kongruent angeordnet.

Gemäß der vorliegenden Erfindung wird der Strom der ersten Flüssigkeit oder Paste über den ersten Zulauf durch den ersten Hohlzylinder zugeführt und anschließend auf mindestens zwei Teilzuläufe aufgeteilt und trifft dann auf die Mischplatte. Gleiches gilt für den Strom der zweiten Flüssigkeit oder Paste. Dieser wird über den zweiten Zulauf durch den zweiten Hohlzylinder zugeführt und anschließend auf mindestens zwei Teilzuläufe aufgeteilt und trifft dann auf die Mischplatte.

Da die Teilströme, die durch die Teilzuläufe verlaufen zueinander kongruent sind, wird der Strom der Flüssigkeit oder Paste aufgrund der äquivalenten fluidischen Bedingungen gleichmäßig aufgeteilt. Je mehr Teilzuläufe verwendet werden, desto mehr Grenzflächen zwischen der ersten Flüssigkeit oder Paste und der zweiten Flüssigkeit oder Paste entstehen, an denen eine diffusive Mischung stattfinden kann. In einer besonders bevorzugten Ausführungsform weist die erfindungsgemäße Vorrichtung 6 Teilzuläufe auf, die die erste Seite der Mischplatte mit dem ersten Hohlzylinder verbinden und 6 Teilzuläufe, die die zweite Seite der Mischplatte mit dem zweiten Hohlzylinder verbinden.

Erfindungsgemäß sind die mindestens zwei Teilzuläufe, die mit dem ersten Hohlzylinder verbunden sind und die mindestens zwei Teilzuläufe, die mit dem zweiten Hohlzylinder verbunden sind, versetzt zueinander auf der ersten und zweiten Seite der Mischplatte angebracht.

Der Versatz der mindestens zwei Teilzuläufe, die mit der ersten Seite der Mischplatte verbunden sind zu den mindestens zwei Teilzuläufen, die mit der zweiten Seite der Mischplatte verbunden sind, ergibt sich wie folgt:

$$\frac{360°}{a+b} = V, \text{ wobei} \qquad [1]$$

a... Gesamtzahl der Teilzuläufe, die mit der ersten Seite der Mischplatte verbunden sind;
b... Gesamtzahl der Teilzuläufe, die mit der zweiten Seite der Mischplatte verbunden sind;
V... Versatz in °.

Erfindungsgemäß ist jeder Teilzulauf, der den ersten Hohlzylinder mit der Mischplatte verbindet, in einem Winkel V versetzt zu mindestens einem der Teilzuläufe, der den zweiten Hohlzylinder mit der Mischplatte verbindet, angeordnet.

Ist beispielsweise die erste Seite der Mischplatte durch sechs Teilzuläufe mit dem ersten Hohlzylinder verbunden und die zweite Seite der Mischplatte durch sechs Teilzuläufe mit dem zweiten Hohlzylinder verbunden, so ergibt sich a=b=6 und damit a+b=12. Der Versatz V berechnet sich nach Formel (1) daher zu V=30°. Die Teilzuläufe auf der ersten Seite der Mischplatte sind demnach jeweils um V=30° versetzt zu den Teilzuläufen auf der zweiten Seite der Mischplatte an der ersten Seite der Mischplatte angebracht.

In der Mischplatte treffen die erste Flüssigkeit oder Paste und die zweite Flüssigkeit oder Paste erstmals aufeinander. Die Mischplatte ist im Wesentlichen zylinderförmig ausgebildet. Die Mischplatte weist einen Hohlraum auf, in dem die Teilströme der ersten und zweiten Flüssigkeit oder Paste aufeinandertreffen. In der Mischplatte findet die Durchmischung der ersten und zweiten Flüssigkeit oder Paste statt und anschließend wird der resultierende Stoffstrom bidirektional aus der Mischplatte durch einen ersten und einen zweiten Auslass abgeleitet. Erfindungsgemäß weist die erste Seite der Mischplatte daher einen ersten Auslass und die zweite Seite der Mischplatte einen zweiten Auslass auf. Der erste Auslass verläuft erfindungsgemäß zumindest teilweise durch den ersten Hohlzylinder und der zweite Auslass verläuft zumindest teilweise durch den zweiten Hohlzylinder. Die Auslässe sind hierfür bevorzugt rohrförmig ausgebildet.

In einer bevorzugten Ausführungsform sind der erste und zweite Auslass im Wesentlichen im Zentrum der ersten Seite der Mischplatte bzw. der zweiten Seite der Mischplatte angeordnet.

Optional weist die Vorrichtung für das Mischen von zwei Flüssigkeiten oder Pasten mindestens einen Zentralauslass auf. Der Zentralauslass verbindet den ersten und den zweiten Auslass und führt den Stoffstrom des ersten Auslasses und des zweiten Auslasses damit zusammen.

Die Vorrichtung kann auf beliebige Größen skaliert werden und damit vorteilhafterweise an das jeweilige Anwendungsgebiet angepasst werden. Wird die Vorrichtung in der Mikrofluidik eingesetzt, werden bevorzugt kleine Volumen verwendet, Ziel ist es hier vor allem ein möglichst kleines Totvolumen zu erzielen. In einer Ausführungsform der vorliegenden Erfindung, weist die Vorrichtung vorteilhafterweise ein Totvolumen <900μl, bevorzugt <250μl, besonders

bevorzugt <52μl auf. Das Totvolumen liegt damit weit unterhalb der aus dem Stand der Technik bekannten Vorrichtungen zum Mischen von zwei Flüssigkeiten oder Pasten in mikrofluidischen Anwendungen. Hierdurch können Ausgangsstoffe eingespart werden, indem der beim Mischvorgang anfallenden Abfall stark reduziert wird. Dies erhöht die Wirtschaftlichkeit der Verfahren in den die erfindungsgemäße Vorrichtung zum Mischen von zwei Flüssigkeiten oder Pasten zum Einsatz kommt.

Werden zwei Ausgangsprodukte miteinander vermischt, die eine Reaktion, z.B. eine Vernetzung, miteinander eingehen, sollte die Reaktion bevorzugt nicht in der Mischvorrichtung stattfinden. Ausgangsstoffe, deren Reaktionszeit miteinander kürzer ist, als die Zeit, die für das Durchmischen in der erfindungsgemäßen Vorrichtung benötigt wird, können in einer Mischvorrichtung daher nicht vermischt werden. Durch das geringe Totvolumen ist die Verweilzeit in der erfindungsgemäßen Vorrichtung für die Ausgangsprodukte nach dem ersten Zusammentreffen bis zum Auslass des Stoffgemischs wesentlich geringer als in Mischvorrichtungen aus dem Stand der Technik. Hierdurch erweitert die erfindungsgemäße Vorrichtung vorteilhafterweise damit auch den Anwendungsbereich beim Mischen von Ausgangsprodukten, die miteinander eine Reaktion eingehen. Durch die kürzere Verweilzeit können Ausgangsprodukte miteinander gemischt werden, die in einem Mischer aus dem Stand der Technik noch innerhalb des Mischers bereits eine Reaktion, z.B. Vernetzung, miteinander eingehen würden.

Eine Skalierung der Dimensionen der Vorrichtung ist erfindungsgemäß möglich. Die Randbedingungen der Skalierung werden durch die Viskositäten der zu mischenden Phasen sowie durch die fertigungsseitigen Auflösungsgrenzen festgelegt. Prinzipiell kann bei einer Skalierung der Vorrichtung die Anzahl der Teilzuläufe, durch die die erste Seite der Mischplatte mit dem ersten Hohlzylinder verbunden ist und die Anzahl der Teilzuläufe, durch die die zweite Seite der Mischplatte mit dem zweiten Hohlzylinder verbunden ist konstant gehalten (i) oder aber an die Größe der Mischplatte angepasst werden (ii). In beiden Fällen stellt der Durchmesser der Mischplatte das Referenzmaß dar. Die einzelnen Elemente der Vorrichtung sind im Folgenden wie folgt gekennzeichnet:

|   | Element der Vorrichtung |
|---|---|
| A | Durchmesser Mischplatte |
| B | Dicke Mischplatte |
| C | Anzahl Teilzuläufe, durch die die erste Seite der Mischplatte mit dem ersten Hohlzylinder verbunden ist; Anzahl Teilzuläufe, durch die die zweite Seite der Mischplatte mit dem zweiten Hohlzylinder verbunden ist |
| D | Durchmesser der einzelnen Teilzuläufe |
| E | Außendurchmesser des ersten Hohlzylinders; Außendurchmesser des zweiten Hohlzylinders |
| F | Innendurchmesser des ersten Hohlzylinders; Innendurchmesser des zweiten Hohlzylinders |
| G | Durchmesser erster Auslass; Durchmesser zweiter Auslass |

Erfindungsgemäß ist der Außendurchmesser und der Innendurchmesser des ersten und des zweiten Hohlzylinders gleich. Weiterhin ist der Durchmesser des ersten Auslasses und der Durchmesser des zweiten Auslasses gleich.

i. Bei einer Skalierung der Vorrichtung unter Beibehaltung der Anzahl der Teilzuläufe C=6, ergeben sich für die Dimensionierung der einzelnen Elemente der Vorrichtung die Verhältnisse:

$$B = A/12$$

$$C = 6$$

$$D = A/6$$

$$E = A/3$$

$$F = A/4$$

$$G = A/6$$

ii. Bei einer Skalierung unter Anpassung der Anzahl der Teilzuläufe ergeben sich abweichend von den unter i. beschriebenen Abhängigkeiten (wobei A in mm angegeben wird):

$$C = A/1 \text{ mm}$$

$$D = 1 \text{ mm}$$

Die Vorrichtung ist erfindungsgemäß bevorzugt einteilig ausgebildet, wodurch die Reinigung der Vorrichtung stark vereinfacht wird und Probleme mit mangelnder Dichtheit, wie sie in den aus dem Stand der Technik bekannten Vorrichtungen auftreten vermieden werden. In einer bevorzugten Ausführungsform wird die erfindungsgemäße Vorrichtung durch ein additives Herstellungsverfahren hergestellt. Geeignete additive Herstellungsverfahren sind in der VDI-Richtlinie VDI 3405:2014-12 genannt. Die Dimension der erfindungsgemäßen Vorrichtung ist skalierbar, kann also je nach Auflösungsvermögen des Druckverfahrens auch durch beliebige additive Verfahren wie PolyJet (PJ), Multi-Jet-Fusion (MJF), Fused Deposition Modeling (FDM), Direct Laser Writing (DLW), LCD-Writing (LCD), Selektives Elektronenstrahlschmelzen (SEBM) oder Selektives Lasersintern (SLS) hergestellt werden. In einer bevorzugten Ausführungsform wird die erfindungsgemäße Vorrichtung durch Stereolithografie (SLA) hergestellt.

Die Vorrichtung kann dabei aus jedem Material bestehen, welches für die Verwendung in einem additiven Herstellungsverfahren geeignet ist. In einer Ausführungsform der vorliegenden Erfindung weist die Vorrichtung ein optisch vernetzbares Material aus der Gruppe enthaltend Epoxide, Acrylate, Methacrylate und Urethane auf. In einer Ausführungsform weist die Vorrichtung das Epoxid Accura® 5530 auf. In einer weiteren Ausführungsform der vorliegenden Erfindung weist die Vorrichtung ein nicht optisch vernetzbares Material aus der Gruppe enthaltend Thermoplaste und Metallpulver auf.

Die Erfindung umfasst weiterhin ein Verfahren zum Mischen einer ersten und einer zweiten Flüssigkeit oder Paste. Alle Merkmale die für die erfindungsgemäße Vorrichtung treffen auch auf das erfindungsgemäße Verfahren zu und umgekehrt.

Das erfindungsgemäße Verfahren zum Mischen einer ersten und einer zweiten Flüssigkeit oder Paste mit einer erfindungsgemäßen Vorrichtung ist, dadurch gekennzeichnet, dass

- die erste Flüssigkeit oder Paste über den ersten Zulauf und den ersten Holzylinder zugeführt wird;
- der Stoffstrom der ersten Flüssigkeit oder Paste durch die mindestens zwei Teilzuläufe auf Teilströme aufgeteilt wird, die auf die erste Seite der Mischplatte treffen;
- die zweite Flüssigkeit oder Paste über den zweiten Zulauf und den zweiten Holzylinder zugeführt wird;
- der Stoffstrom der zweiten Flüssigkeit oder Paste durch die mindestens zwei Teilzuläufe auf Teilströme aufgeteilt wird, die auf die zweite Seite der Mischplatte treffen;
- die Teilströme des ersten Stoffstromes und die Teilströme des zweiten Stoffstromes in der Mischplatte aufeinandertreffen, sich vermischen und ein Stoffgemisch bilden;
- ein erster Teil des Stoffgemischs durch den ersten Auslass durch den ersten Holzylinder hindurch von der Mischplatte abgeführt wird und ein zweiter Teil der des Stoffgemischs durch den zweiten Auslass durch den zweiten Holzylinder hindurch von der Mischplatte abgeführt wird;
- optional das der erste und der zweite Teil des von der Mischplatte abgeführten Stoffgemischs zusammengeführt werden und durch mindestens einen Zentralauslass weitergeleitet werden.

Erfindungsgemäß wird in dem erfindungsgemäßen Verfahren eine erste Flüssigkeit oder Paste über den ersten Zulauf und den ersten Holzylinder zugeführt, wobei der Stoffstrom der ersten Flüssigkeit oder Paste durch die mindestens zwei Teilzuläufe auf Teilströme aufgeteilt wird, die auf die erste Seite der Mischplatte treffen. Entsprechend wird die zweite Flüssigkeit oder Paste über den zweiten Zulauf und den zweiten Holzylinder zugeführt und der Stoffstrom der zweiten Flüssigkeit oder Paste wird durch die mindestens zwei Teilzuläufe auf Teilströme aufgeteilt, die auf die zweite Seite der Mischplatte treffen. Die Teilströme sind dabei kongruent zueinander, weswegen aufgrund äquivalenter fluidischer Bedingungen der Stoffstrom der ersten Flüssigkeit oder Paste und der Stoffstrom der zweiten Flüssigkeit oder Paste jeweils gleichmäßig auf die Teilströme aufgeteilt wird. Der Volumenstrom der ersten Flüssigkeit oder Paste am ersten Zulauf und der Volumenstrom der zweiten Flüssigkeit oder Paste am zweiten Zulauf sind bevorzugt gleich groß.

Die Teilströme des ersten Stoffstromes und die Teilströme des zweiten Stoffstromes treffen in der Mischplatte aufeinander, vermischen sich diffusiv und bilden ein Stoffgemisch. Ein erster Teil des Stoffgemischs wird durch den ersten Auslass durch den ersten Holzylinder hindurch von der Mischplatte abgeführt und ein zweiter Teil der des Stoffgemischs durch den zweiten Auslass durch den zweiten Holzylinder hindurch von der Mischplatte.

Optional wird der erste und der zweite Teil des von der Mischplatte abgeführten Stoffgemischs zusammengeführt und durch mindestens einen Zentralauslass weitergeleitet. An dem Zentralauslass kann sich beispielsweise eine Düse befinden, mit der das Stoffgemisch in einem übergeordneten Verfahren weiterverarbeitet wird.

Dadurch, dass sich das Mischprinzip beliebig skalieren lässt und nur durch fertigungsseitige Beschränkungen limitiert wird, eröffnen sich für die erfindungsgemäße Vorrichtung und das erfindungsgemäße Verfahren zahlreiche Anwendungsfelder. Die Miniaturisierung der Vorrichtung prädestiniert diese neben der Anwendung in Druckvorrichtungen auch als Funktionsmodul in mikrofluidischen on-Chip Anwendungen. Die erfindungsgemäße Vorrichtung oder das Verfahren können daher insbesondere in einer Druckvorrichtung für den 3-dimensionalen Druck insbesondere extrusionsbasierte Druckverfahren oder als Funktionsmodul in mikrofluidischen on-Chip Anwendung finden.

Im Folgenden wird die vorliegende Erfindung weiterhin anhand von 8 Figuren und 3 Ausführungsbeispielen näher erläutert.

Figur 1     stellt eine Ausführungsform der erfindungsgemäßen Vorrichtung in perspektivischer Ansicht dar;
Figur 2     stellt eine Frontansicht einer Ausführungsform der erfindungsgemäßen Vorrichtung dar;
Figur 3     stellt eine Seitenansicht einer Ausführungsform der erfindungsgemäßen Vorrichtung dar;
Figur 4     (A) und (B) stellen zwei Ansichten der Ausführungsformen dar;
Figur 5     stellt den Versatz zwischen den Teilzuläufen dar;
Figur 6     Photometrische Messung von Flüssigkeitsgemischen, hergestellt mit einem Standardverfahren und mit einer erfindungsgemäßen Vorrichtung zum Mischen;
Figur 7     stellt einen Gradientenmischkopf aus dem Stand der Technik dar.

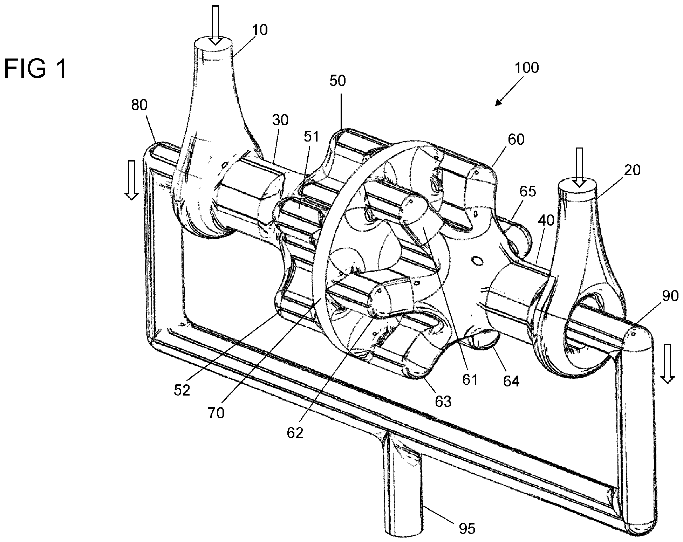

**Figur 1** stellt eine Ausführungsform der erfindungsgemäßen Vorrichtung 100 in perspektivischer Ansicht dar. Die erste Flüssigkeit oder Paste wird der Vorrichtung über den ersten Zulauf 10 der Vorrichtung 100 zugeführt und durch den ersten Hohlzylinder 30 über die Teilzuläufe 50, 51, 52 zur Mischplatte 70 geleitet. Der erste Hohlzylinder 30 ist in dieser Ausführungsform durch 6 Teilzuläufe 50-55 mit der Mischplatte 70 verbunden. Die zweite Flüssigkeit oder Paste wird über den zweiten Zulauf 20 der Vorrichtung 100 zugeführt und durch den zweiten Hohlzylinder 40 über die Teilzuläufe 60-65 zur Mischplatte 70 geleitet. Der zweite Hohlzylinder 40 ist dabei, genau wie der erste Hohlzylinder 30, durch 6 Teilzuläufe 60-65 mit der Mischplatte 70 verbunden. Die Teilzuläufe 50, 51, 53, die den ersten Hohlzylinder 30 mit der Mischplatte 70 verbinden, sind jeweils um einen Winkel V=30° versetzt zu den Teilzuläufen 60-65, die den zweiten Hohlzylinder 40 mit der Mischplatte 70 verbinden, an der Mischplatte 70 angeordnet. Das heißt, dass wie in der Figur 1 zu erkennen, beispielsweise der Teilzulauf 51 um einen Winkel von V=30° versetzt zu dem Teilzulauf 62 angeordnet ist. Der Teilzulauf 50 ist wiederum um 30° versetzt zu dem Teilzulauf 61 angeordnet. Die beschrieben Anordnung trifft auf alle weiteren Teilzuläufe gleichermaßen zu. In dieser Weise ist jeder Teilzulauf 50, 51, 52, der den ersten Hohlzylinder 30 mit der Mischplatte 70 verbindet, in einem Winkel V=30° versetzt zu mindestens einem der Teilzuläufe 60-65, der den zweiten Hohlzylinder 40 mit der Mischplatte 70 verbindet, angeordnet. In der Mischplatte 70 treffen die Teilströme der ersten Flüssigkeit oder Paste und der zweiten Flüssigkeit oder Paste aufeinander und es findet eine diffusive Vermischung statt. Der resultierende Stoffstrom wird bidirektional von der Mischplatte 70 über den ersten Auslass 80 und den zweiten Auslass 90 abgeleitet.

Der erste Auslass 80 verläuft dabei abschnittsweise durch den ersten Hohlzylinder 30 und der zweite Auslass 90 verläuft abschnittsweise durch den zweiten Hohlzylinder 40. Bei der Zuführung der ersten Flüssigkeit oder Paste über den ersten Zulauf 10 strömt der zugeführte Stoffstrom daher durch den ersten Hohlzylinder 30 zu den Teilzuläufen 50, 51, 52, wobei der Stoffstrom den ersten Auslass 80 im ersten Hohlzylinder 30 umströmt. Entsprechend strömt die zweite Flüssigkeit oder Paste bei der Zuführung über den zweiten Zulauf 20 durch den zweiten Hohlzylinder 40 zu den Teilzuläufen 60-65, wobei der Stoffstrom den zweiten Auslass 90 im zweiten Hohlzylinder 40 umströmt.

Der erste Auslass 80 und der zweite Auslass 90 werden in dieser Ausführungsform zu einem zentralen Auslass 95 zusammengeführt. Der zentrale Auslass 95 ist eine optionales Merkmal der Vorrichtung in anderen Ausführungsformen kann der nach der Vermischung resultierende Stoffstrom auch lediglich über den ersten Auslass 80 und den zweiten Auslass 90 abgeleitet werden, ohne dass diese Auslässe zusammengeführt werden.

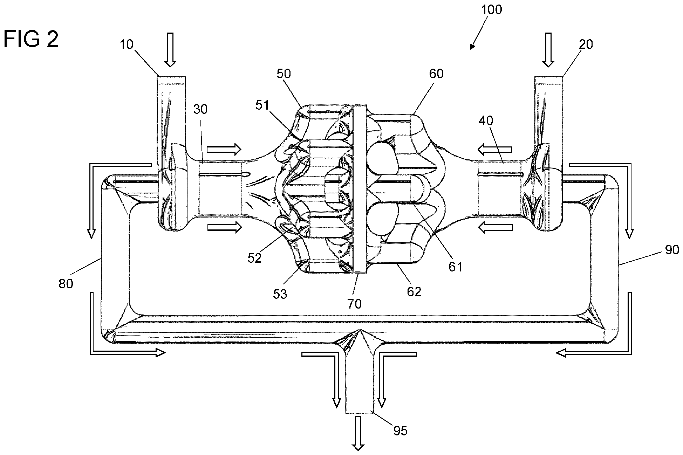

**Figur 2** stellt eine Frontansicht der in Figur 1 dargestellten Ausführungsform der Vorrichtung 100 dar. In der Frontansicht ist zusätzlich zu den Teilzuläufen 50, 51, 52 ein weiterer Teilzulauf 53 zu erkennen, der den ersten Hohlzylinder 30 mit der Mischplatte 70 verbindet. Alle weiteren Merkmale sind im Zusammenhang mit Figur 1 bereits beschrieben.

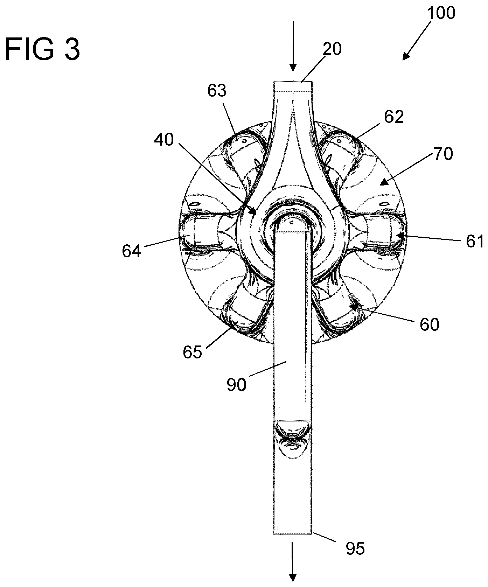

**Figur 3** stellt eine Seitenansicht der in Figur 1 dargestellten Ausführungsform der Vorrichtung 100 dar. Die Vorrichtung 100 ist mit einer Ansicht der Mischplatt 70 dargestellt, in der die Teilzuläufe 60-65 zu erkennen sind, die den zweiten Hohlzylinder 40 mit der Mischplatte 70 verbinden. Weiterhin ist der zweite Zulauf 20 zu erkennen. In der Seitenansicht ist ebenfalls der zentrale Auslass 95 dargestellt. Alle weiteren Merkmale der Vorrichtung 100 werden durch die Mischplatte 70, den zweiten Zulauf 20 und den zweiten Auslass 90 verdeckt.

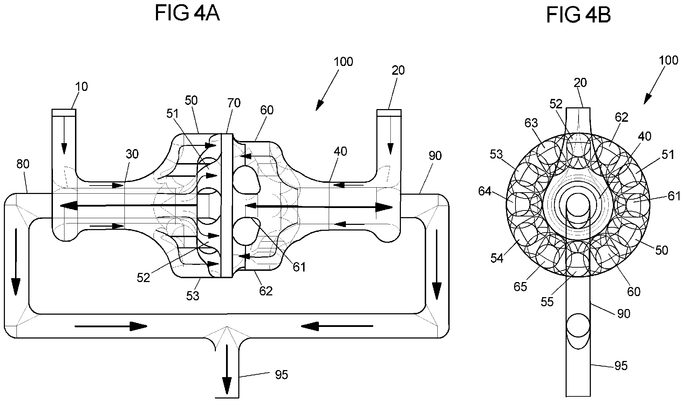

**Figur 4 (A)** stellt eine Ausführungsform der Vorrichtung 100 in einer transparenten Ansicht dar. Die Pfeile kennzeichnen den Verlauf der Stoffströme. Deutlich zu erkennen ist die Zugabe der ersten Flüssigkeit oder Paste über den ersten Zulauf 10. Die erste Flüssigkeit oder Paste umströmt dann im ersten Hohlzylinder 30 den ersten Auslass 80 und wird durch die Teilzuläufe 50-53 in Teilströme aufgeteilt. Die Teilzuläufe 50-53 münden an die Mischplatte 70. Die zweite Flüssigkeit oder Paste wird entsprechend über den zweiten Zulauf 20 zugegeben, strömt durch den zweiten Hohlzylinder 40 und wird durch die Teilzuläufe 60-62 ebenfalls in Teilströme aufgeteilt. Der erste Hohlzylinder 30 ist in dieser Ausführungsform durch 6 Teilzuläufe 50-55 mit der Mischplatte 70 verbunden, analog ist der zweite Hohlzylinder 40 ebenfalls mit 6 Teilzuläufen 60-62 mit der Mischplatte 70 verbunden. In der Ansicht sind einige der Teilzuläufe durch die sichtbaren Teilzuläufe 50-53 und 60-62 verdeckt. Von der Mischplatte 70 wird der nach dem Vermischen resultierende Stoffstrom durch den ersten Auslass 80 und den zweiten Auslass 90 abgeleitet. In der Darstellung ist deutlich zu erkennen, dass der erste Auslass 80 teilweise durch den ersten Hohlzylinder 30 und der zweite Auslass 90 teilweise durch den zweiten Hohlzylinder 40 verläuft.

**Figur 4 (B)** stellt die in Figur 4 (A) dargestellte Ausführungsform in einer transparenten Seitenansicht dar. In dieser Ansicht sind die Teilzuläufe 60-65 und 50-55 deutlich zu erkennen.

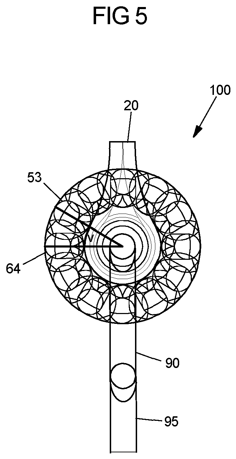

**Figur 5** stellt eine transparente Seitenansicht einer Vorrichtung 100 dar. In der Figur sind die Teilzuläufe 50-55 und 60-65 zu erkennen. Beispielhaft ist der stellt den Versatz V zwischen dem Teilzulauf 65 und dem Teilzulauf 53 eingezeichnet. Der Übersichtlichkeit halber wurde auf eine Bezeichnung der übrigen Teilzuläufe verzichtet.

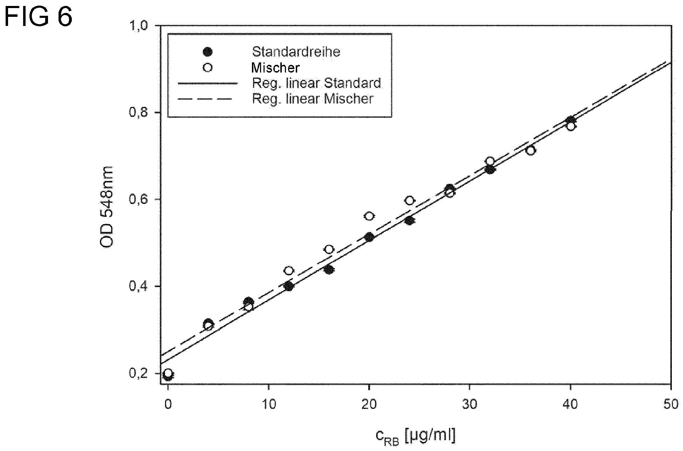

**Figur 6** stellt die Ergebnisse einer photometrischen Messung von Flüssigkeitsgemischen, hergestellt mit einem Standardverfahren und mit einer erfindungsgemäßen Vorrichtung 100 dar.

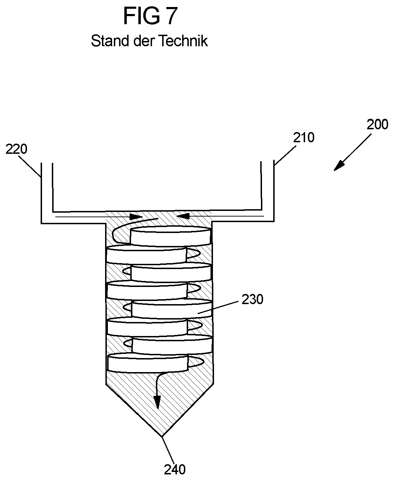

**Figur 7** stellt einen Gradientenmischkopf 200 aus dem Stand der Technik dar. Es werden zwei Ausgangsprodukte über die Zuläufe 210, 220 zugeführt und zwischen Edelstahldisks 230 gewalgt, sodass nach mehreren Stufen eine Durchmischung der Ausgangsprodukte zustande kommt. Das resultierende Stoffgemisch verlässt den Mischer durch die Austrittsöffnung 240. Nachteile dieser Gradientenmischköpfe 200 wurden bereits eingangs beschrieben.

## Ausführungsbeispiel 1 - Vorrichtung

In einer Ausführungsform wies die Vorrichtung folgende Maße auf:

| | Element der Vorrichtung | Wert |
|---|---|---|
| A | Durchmesser Mischplatte | 6 mm |
| B | Dicke Mischplatte | 0,5 mm |
| C | Anzahl Teilzuläufe, durch die die erste Seite der Mischplatte mit dem ersten Hohlzylinder verbunden ist; Anzahl Teilzuläufe, durch die die zweite Seite der Mischplatte mit dem zweiten Hohlzylinder verbunden ist | 6 |
| D | Durchmesser der einzelnen Teilzuläufe | 1 mm |
| E | Außendurchmesser des ersten Hohlzylinders; Außendurchmesser des zweiten Hohlzylinders | 2 mm |
| F | Innendurchmesser des ersten Hohlzylinders; Innendurchmesser des zweiten Hohlzylinders | 1,5 mm |
| G | Durchmesser erster Auslass; Durchmesser zweiter Auslass | 1 mm |

Der erste und der zweite Auslass 80, 90 wurden zu einem zentralen Auslass 95 vereinigt. Die Länge des ersten Auslasses 80 und des zweiten Auslasses 90 wurde entsprechend so gestaltet, dass das Totvolumen der Vorrichtung 51,6 $\mu$l betrug. Die Verweilzeit von Flüssigkeiten oder Pasten nach dem ersten Kontakt ist in der Mischplatte der derart gestalteten Vorrichtung ausreichend lang, um selbst bei laminarer Strömung auf diffusem Wege eine Durchmischung zu erreichen, wenn am zentralen Auslass 95 ein Volumenstrom von 50 bis 100 $\mu$l/min anliegt.

## Ausführungsbeispiel 2 - Funktionstest

In einem Funktionstest mit dem Farbstoff Rose Bengal wurde händisch eine Standardreihe mit distinkten Konzentrationen an Farbstoff hergestellt. Anschließend wurden die äquivalenten Mischverhältnissen von Farbstoff und Wasser mit einer erfindungsgemäßen Vorrichtung hergestellt und anschließend durch eine 3D-Druckvorrichtung gedruckt. Die erfindungsgemäße Vorrichtung war in diesem Ausführungsbeispiel Teil einer 3D-Druckvorrichtung in einem 3D-Bioprintingverfahren. Die hergestellten Mischungen wurden photometrisch, bei OD=548 nm) vermessen. Die Ergebnisse dieser Messungen sind in Figur 6 dargestellt. Wie zu erkennen ist, sind die Ergebnisse der Standardreihe, die händisch hergestellt wurde und der mittels der erfindungsgemäßen Vorrichtung erzeugten Konzentrationsreihe nahezu identisch, die Performance der erfindungsgemäßen Vorrichtung ist exzellent. Der relative Unterschied der Integrale der linearen Regressionen im Messintervall beträgt lediglich 2,8 %.

**Ausführungsbeispiel** 3 - **Volumenströme**

Die diffusive Durchmischung einer ersten Flüssigkeit und einer zweiten Flüssigkeit wurde mittels CFD Simulation für eine Vorrichtung mit den Abmaßen, wie in Ausführungsbeispiel 1 beschrieben, überprüft. Als Randbedingung für die Wärmeübertragung waren ausschließlich konvektive und diffusive Prozesse erlaubt. Wärmestrahlung war nicht erlaubt. Als erste Flüssigkeit wurde Wasser mit einer Temperatur von 1 °C verwendet und als zweite Flüssigkeit Wasser mit einer Temperatur von 91 °C. Der Volumenstrom am ersten Zulauf 10 war dabei immer gleich dem Volumenstrom am zweiten Zulauf 20. Bis zu Volumenströmen < 2700 μl/min erfolgte eine nahezu vollständige diffusive Durchmischung in der Mischplatte. Oberhalb dieses Volumenstroms traten teilweise unvollständige Durchmischungen der ersten Flüssigkeit und der zweiten Flüssigkeit auf, wodurch es zu einem Konzentrationsunterschied zwischen erstem und zweitem Auslass 80, 90 kam. Durch diesen Effekt bildeten sich sehr geringe Inhomogenitäten am zentralen Auslass 95 aus, die jedoch selbst bei einem 80fach höherem Volumenstrom als im Normalbetrieb üblich unter 5 % lagen.

**Bezugszeichenliste**

| | |
|---|---|
| 10 | erster Zulauf |
| 20 | zweiter Zulauf |
| 30 | erster Hohlzylinder |
| 40 | zweiter Hohlzylinder |
| 50-55 | Teilzuläufe |
| 60-65 | Teilzuläufe |
| 70 | Mischplatte |
| 80 | erster Auslass |
| 90 | zweiter Auslass |
| 95 | zentraler Auslass |
| 100 | Vorrichtung |
| 200 | Gradientenmischkopf |
| 210, 220 | Zulauf |
| 230 | Edelstahldisc |
| 240 | Austrittsöffnung |

**Patentansprüche**

1.  Vorrichtung (100) für das Mischen von zwei Flüssigkeiten oder Pasten, aufweisend einen ersten Zulauf (10), einen zweiten Zulauf (20), einen ersten Hohlzylinder (30), einen zweiten Hohlzylinder (40), ein Mischelement und optional mindestens einen

    das Mischelement eine Mischplatte (70) mit einer ersten und einer zweiten Seite aufweist;
    die Mischplatte (70) einen Hohlraum aufweist und im Wesentlichen zylinderförmig ist;
    das Mischelement mindestens zwei Teilzuläufe (50-55) aufweist, durch die die erste Seite der Mischplatte (70) mit dem ersten Hohlzylinder (30) verbunden ist;
    das Mischelement mindestens zwei Teilzuläufe (60-65) aufweist, durch die die zweite Seite der Mischplatte (70) mit dem zweiten Hohlzylinder (40) verbunden ist;
    **dadurch gekennzeichnet, dass**
    die erste Seite der Mischplatte einen ersten Auslass (80) und die zweite Seite der Mischplatte einen zweiten Auslass (90) aufweist; und
    der erste Auslass (80) zumindest teilweise durch den ersten Hohlzylinder (30) und der zweite Auslass (90) zumindest teilweise durch den zweiten Hohlzylinder (40) verläuft.

2.  Vorrichtung (100) gemäß Anspruch 1, **dadurch gekennzeichnet, dass** die erste Seite der Mischplatte durch 2 bis 10, bevorzugt durch 4 bis 8, besonders bevorzugt durch 6 Teilzuläufe (50-55) mit dem ersten Hohlzylinder (30) verbunden und die zweite Seite der Mischplatte mit genauso vielen Teilzuläufen (60-65) mit dem zweiten Hohlzylinder (40) verbunden ist, wie die erste Seite der Mischplatte mit Teilzuläufen (50-55) mit dem ersten Hohlzylinder (30) verbunden ist.

3.  Vorrichtung (100) gemäß einem der vorangegangenen Ansprüche, **dadurch gekennzeichnet, dass** alle Teilzuläufe (50-55) die mit dem ersten Hohlzylinder (30) verbunden sind im Wesentlichen am Rand der ersten Seite der Mischplatte (70) angebracht sind und die Teilzuläufe (50-55) zueinander kongruent sind; und dass alle Teilzuläufe (60-65) die mit dem zweiten Hohlzylinder (40) verbunden sind im Wesentlichen am Rand der zweiten Seite der Mischplatte (70) angebracht sind und die Teilzuläufe (60-65) zueinander kongruent sind.

4. Vorrichtung (100) gemäß einem der vorangegangenen Ansprüche, **dadurch gekennzeichnet, dass** sich der erste (80) und zweite Auslass (90) im Wesentlichen im Zentrum der ersten Seite der Mischplatte (70) bzw. der zweiten Seite der Mischplatte (70) befinden.

5. Vorrichtung (100) gemäß einem der vorangegangenen Ansprüche, **dadurch gekennzeichnet, dass** die mindestens zwei Teilzuläufe (50-55), die mit dem ersten Hohlzylinder (30) verbunden sind und die mindestens zwei Teilzuläufe (60-65), die mit dem zweiten Hohlzylinder (40) verbunden sind, um den Winkel $V$

$$\frac{360°}{a+b} = V \ ,$$

wobei

a... Gesamtzahl der Teilzuläufe (50-55), die mit der ersten Seite der Mischplatte (70) verbunden sind;
b... Gesamtzahl der Teilzuläufe (60-65), die mit der zweiten Seite der Mischplatte (70) verbunden sind;
V... Versatz in °;

versetzt zueinander auf der ersten und zweiten Seite der Mischplatte (70) angebracht sind.

6. Vorrichtung (100) gemäß einem der vorangegangenen Ansprüche, **dadurch gekennzeichnet, dass** die Vorrichtung (100) einteilig ausgebildet ist.

7. Vorrichtung (100) gemäß einem der vorangegangenen Ansprüche, **dadurch gekennzeichnet, dass** die Vorrichtung ein Totvolumen aufweist welches <900μl, bevorzugt <250μl, besonders bevorzugt <52μl ist.

8. Vorrichtung (100) gemäß einem der vorangegangenen Ansprüche, **dadurch gekennzeichnet, dass** die Vorrichtung (100) durch ein additives Herstellungsverfahren, insbesondere durch Stereolithografie hergestellt ist.

9. Verfahren zum Mischen einer ersten und einer zweiten Flüssigkeit oder Paste mit einer Vorrichtung (100) gemäß einem der Ansprüche 1 bis 8, wobei

• die erste Flüssigkeit über den ersten Zulauf (10) und den ersten Holzylinder (30) zugeführt wird;
• der Flüssigkeitsstrom der ersten Flüssigkeit durch die mindestens zwei Teilzuläufe (50-55) auf Teilströme aufgeteilt wird, die auf die erste Seite der Mischplatte (70) treffen;
• die zweite Flüssigkeit über den zweiten Zulauf (20) und den zweiten Holzylinder (40) zugeführt wird;
• der Flüssigkeitsstrom der zweiten Flüssigkeit durch die mindestens zwei Teilzuläufe (60-65) auf Teilströme aufgeteilt wird, die auf die zweite Seite der Mischplatte (70) treffen;
• der Teilströme des ersten Flüssigkeitsstromes und die Teilströme des zweiten Flüssigkeitsstromes in der Mischplatte (70) aufeinandertreffen, sich vermischen und eine Flüssigkeitsgemisch bilden;
• ein erster Teil des Flüssigkeitsgemischs durch den ersten Auslass (80) durch den ersten Holzylinder (30) hindurch von der Mischplatte (70) abgeführt wird und ein zweiter Teil der des Flüssigkeitsgemischs durch den zweiten Auslass (90) durch den zweiten Holzylinder (40) hindurch von der Mischplatte (70) abgeführt wird;
• optional der erste und der zweite Teil des von der Mischplatte (70) abgeführten Flüssigkeitsgemischs zusammengeführt werden und durch mindestens einen Zentralauslass (95) weitergeleitet werden.

**Claims**

1. Device (100) for mixing two liquids or pastes, comprising a first inlet (10), a second inlet (20), a first hollow cylinder (30), a second hollow cylinder (40), a mixing element and optionally at least one central outlet (95), the mixing element having a mixing plate (70) with a first and a second face;

the mixing plate (70) has a cavity and is substantially cylindrical;

the mixing element has at least two partial inlets (50-55) via which the first face of the mixing plate (70) is connected to the first hollow cylinder (30);

the mixing element has at least two partial inlets (60-65) via which the second face of the mixing plate (70) is connected to the second hollow cylinder (40);

**characterized in that** the first face of the mixing plate has a first outlet (80) and the second face of the mixing plate has a second outlet (90); and

the first outlet (80) extends at least partially through the first hollow cylinder (30) and the second outlet (90) extends at least partially through the second hollow cylinder (40).

2.  Device (100) according to claim 1, **characterized in that** the first face of the mixing plate is connected to the first hollow cylinder (30) via 2 to 10, preferably via 4 to 8, particularly preferably via 6 partial inlets (50-55) and the second face of the mixing plate is connected to the second hollow cylinder (40) via as many partial inlets (60-65) as the first face of the mixing plate is connected to the first hollow cylinder (30) via partial inlets (50-55).

3.  Device (100) according to either of the preceding claims,
    **characterized in that** all partial inlets (50-55) connected to the first hollow cylinder (30) are arranged substantially at the edge of the first face of the mixing plate (70) and the partial inlets (50-55) are congruent with one another; **and in that** all partial inlets (60-65) connected to the second hollow cylinder (40) are arranged substantially at the edge of the second face of the mixing plate (70) and the partial inlets (60-65) are congruent with one another.

4.  Device (100) according to any of the preceding claims, **characterized in that** the first outlet (80) and the second outlet (90) are located substantially in the center of the first face of the mixing plate (70) and the second face of the mixing plate (70), respectively.

5.  Device (100) according to any of the preceding claims, **characterized in that** the at least two partial inlets (50-55) connected to the first hollow cylinder (30) and the at least two partial inlets (60-65) connected to the second hollow cylinder (40) are mounted on the first and second face of the mixing plate (70) so as to be offset from one another by the angle V

$$\frac{360°}{a+b} = V,$$

where

a... total number of partial inlets (50-55) connected to the first face of the mixing plate (70);
b... total number of partial inlets (60-65) connected to the second face of the mixing plate (70);
V... offset in °.

6.  Device (100) according to any of the preceding claims, **characterized in that** the device (100) is formed in one piece.

7.  Device (100) according to any of the preceding claims, **characterized in that** the device has a dead volume which is <900μl, preferably <250μl, particularly preferably <52μl.

8.  Device (100) according to any of the preceding claims, **characterized in that** the device (100) is manufactured by an additive manufacturing process, in particular by stereolithography.

9.  Method for mixing a first and a second liquid or paste with a device (100) according to any of claims 1 to 8, wherein

    • the first liquid is supplied via the first inlet (10) and the first hollow cylinder (30);
    • the liquid flow of the first liquid is divided by the at least two partial inlets (50-55) into partial flows which impinge on the first face of the mixing plate (70);
    • the second liquid is supplied via the second inlet (20) and the second hollow cylinder (40);
    • the liquid flow of the second liquid is divided by the at least two partial inlets (60-65) into partial flows which impinge on the second face of the mixing plate (70);
    • the partial flows of the first liquid flow and the partial flows of the second liquid flow meet in the mixing plate (70), mix and form a liquid mixture;
    • a first part of the liquid mixture is discharged from the mixing plate (70) via the first outlet (80) through the first hollow cylinder (30) and a second part of the liquid mixture is discharged from the mixing plate (70) via the second outlet (90) through the second hollow cylinder (40);
• optionally, the first and second parts of the liquid mixture discharged from the mixing plate (70) are combined and passed on via at least one central outlet (95).

## Revendications

**1.** Dispositif (100) pour le mélange de deux liquides ou pâtes, présentant un premier moyen d'alimentation (10), un second moyen d'alimentation (20), un premier cylindre creux (30), un second cylindre creux (40), un élément de mélange et, éventuellement, au moins une sortie centrale (95), dans lequel l'élément de mélange présente une plaque de mélange (70) comportant un premier et un second côté ;

la plaque de mélange (70) présente une cavité et a une forme sensiblement cylindrique ;
l'élément de mélange comprend au moins deux moyens d'alimentation partiels (50-55) par lesquels le premier côté de la plaque de mélange (70) est relié au premier cylindre creux (30) ;
l'élément de mélange présente au moins deux moyens d'alimentation partiels (60-65) par lesquels le second côté de la plaque de mélange (70) est relié au second cylindre creux (40) ;
**caractérisé en ce que** le premier côté de la plaque de mélange présente une première sortie (80) et le second côté de la plaque de mélange présente une seconde sortie (90) ; et
la première sortie (80) s'étend au moins partiellement à travers le premier cylindre creux (30) et la seconde sortie (90) s'étend au moins partiellement à travers le second cylindre creux (40).

**2.** Dispositif (100) selon la revendication 1, **caractérisé en ce que** le premier côté de la plaque de mélange est relié au premier cylindre creux (30) par 2 à 10, de préférence par 4 à 8, de manière particulièrement préférée par 6 moyens d'alimentation partiels (50-55) et le second côté de la plaque de mélange est relié au second cylindre creux (40) par autant de moyens d'alimentation partiels (60-65) que le premier côté de la plaque de mélange est relié au premier cylindre creux (30) par des moyens d'alimentation partiels (50-55).

**3.** Dispositif (100) selon l'une des revendications précédentes,
**caractérisé en ce que** tous les moyens d'alimentation partiels (50-55) reliés au premier cylindre creux (30) sont montés sensiblement sur le bord du premier côté de la plaque de mélange (70) et les moyens d'alimentation partiels (50-55) sont congruents entre eux ; **et en ce que** tous les moyens d'alimentation partiels (60-65) reliés au second cylindre creux (40) sont montés sensiblement sur le bord du second côté de la plaque de mélange (70) et les moyens d'alimentation partiels (60-65) sont congruents entre eux.

**4.** Dispositif (100) selon l'une des revendications précédentes,
**caractérisé en ce que** les première (80) et seconde (90) sorties sont situées sensiblement au centre du premier côté de la plaque de mélange (70) ou du second côté de la plaque de mélange (70).

**5.** Dispositif (100) selon l'une des revendications précédentes,
**caractérisé en ce que** les au moins deux moyens d'alimentation partiels (50-55) reliés au premier cylindre creux (30) et les au moins deux moyens d'alimentation partiels (60-65) reliés au second cylindre creux (40) sont montés de manière à être décalés les uns par rapport aux autres de l'angle V

$$\frac{360°}{a+b} = V \quad ,$$

dans lequel

a... nombre total de moyens d'alimentation partiels (50-55) reliés au premier côté de la plaque de mélange (70) ;
b... nombre total de moyens d'alimentation partiels (60-65) reliés au second côté de la plaque de mélange (70) ;
V... décalage en ° ;
sur les premier et second côtés de la plaque de mélange (70).

**6.** Dispositif (100) selon l'une des revendications précédentes,
**caractérisé en ce que** le dispositif (100) est réalisé d'une seule pièce.

**7.** Dispositif (100) selon l'une des revendications précédentes,
**caractérisé en ce que** le dispositif présente un volume mort qui est < 900 µl, de préférence < 250 µl, de manière particulièrement préférée < 52 µl.

**8.** Dispositif (100) selon l'une des revendications précédentes,
**caractérisé en ce que** le dispositif (100) est fabriqué par un procédé de fabrication additive, en particulier par stéréolithographie.

**9.** Procédé pour le mélange d'un premier et d'un second liquide ou pâte avec un dispositif (100) selon l'une des revendications 1 à 8, dans lequel

• le premier liquide est amené par l'intermédiaire du premier moyen d'alimentation (10) et du premier cylindre creux (30) ;
• le flux de liquide du premier liquide est divisé par les au moins deux moyens d'alimentation partiels (50-55) en flux partiels qui arrivent sur le premier côté de la plaque de mélange (70) ;
• le second liquide est amené par l'intermédiaire du second moyen d'alimentation (20) et du second cylindre creux (40) ;
• le flux de liquide du second liquide est divisé par les au moins deux moyens d'alimentation partiels (60-65) en flux partiels qui arrivent sur le second côté de la plaque de mélange (70) ;
• les flux partiels du premier flux de liquide et les flux partiels du second flux de liquide se rencontrent dans la plaque de mélange (70), se mélangent et forment un mélange de liquides ;
• une première partie du mélange de liquides est évacuée de la plaque de mélange (70) par la première sortie (80) à travers le premier cylindre creux (30) et une seconde partie du mélange de liquides est évacuée de la plaque de mélange (70) par la seconde sortie (90) à travers le second cylindre creux (40) ;
• éventuellement, la première et la seconde partie du mélange de liquides évacué de la plaque de mélange (70) sont réunies et transmises par au moins une sortie centrale (95).

FIG 1

FIG 2

FIG 3

FIG 4A

FIG 4B

FIG 5

FIG 6

# FIG 7

Stand der Technik

**IN DER BESCHREIBUNG AUFGEFÜHRTE DOKUMENTE**

**In der Beschreibung aufgeführte Patentdokumente**

- DE 102018104840 A1
- DE 10356308
- EP 1930070 A1